# FASCICULE DE BREVET EUROPEEN

(11) **EP 2 444 686 B1**
(45) Date de publication et mention de la délivrance du brevet: **16.03.2016**
(21) Numéro de dépôt: 11182675.6
(22) Date de dépôt: 26.09.2011
(51) Int. Cl.: F16D 65/00, F16D 65/14, B60T 13/74

(54) **Système de frein à disque électrique**
Elektrische Scheibenbremse
Electric disc brake system.

(30) Priorité: 22.10.2010 FR 1004174
(43) Date de publication de la demande: 25.04.2012
(73) Titulaire: Robert Bosch GmbH, 70442 Stuttgart (DE)
(72) Inventeur: Chevallet, Frédéric, 75019 Paris (FR); Ramdane, Abdessamed, 60000 Beauvais (FR)

(56) Documents cités:
- DE-A1- 10 248 852
- DE-A1- 10 313 990
- DE-A1- 19 804 676
- US-A1- 2005 092 558
- US-A1- 2006 202 555

## Description

### Domaine de l'invention

La présente invention concerne un système de frein à disque électrique comprenant : - un étrier portant un premier patin de frein et un piston portant un second patin de frein pour coopérer avec le disque de frein - un motoréducteur actionnant le piston de frein pour commander le mouvement de serrage et de desserrage du frein.

Le document US 2006/202555 A1 montre un système de frein d'après le préambule de la revendication 1.

### Etat de la technique

Il existe déjà des systèmes de freins à moteur électrique du type défini ci-dessus, notamment dans le document WO 2007/107398 A1.

Il arrive que selon ses conditions de fonctionnement et son état, le frein émette des vibrations perçues de manière gênante.

### But de l'invention

La présente invention a pour but de développer un système de frein à disque électrique permettant d'éliminer ou de réduire fortement les vibrations susceptibles d'être émises par le frein.

### Exposé et avantages de l'invention

A cet effet, l'invention concerne un système de frein à disque électrique du type défini ci-dessus caractérisé en ce qu'il comprend : A) moins un capteur combiné au frein pour saisir un signal de vibration émis par le frein au moment de son actionnement, et B) un circuit d'analyse et de commande comprenant : - un moyen d'analyse de fréquence pour décomposer le signal en ses fréquences fondamentales, - un comparateur pour comparer l'enveloppe des fréquences à un gabarit, et - un moyen de commande recevant le signal de comparaison pour modifier l'action de serrage du frein par le motoréducteur en fonction du résultat de la comparaison.

Le système de freins selon l'invention permet de contrôler, de limiter les vibrations et les efforts transmis au châssis par le frein lors d'une phase de serrage. Selon une caractéristique particulièrement avantageuse, le moyen d'analyse de fréquence applique une transformation de Fourier FFT au signal du capteur.

Le contrôle effectué par le circuit d'analyse et de commande permet d'agir tant au moment du serrage que lors du desserrage et d'éviter les bruits de broutage ou de sifflement.

Les vibrations et les efforts du frein transmis au châssis, sont réduits en phase active de serrage du frein.

En l'absence de bruit, le système de freins est transparent et le circuit d'analyse et de commande n'agit pas sur le fonctionnement du frein. Ce n'est que si les limites prévues sont dépassées, qu'une action, de préférence avec réaction, est exercée.

Suivant une caractéristique avantageuse, le gabarit appliqué à la comparaison avec le signal obtenu à partir du bruit, a, selon un exemple, un niveau constant ou sensiblement constant pour les basses fréquences et les fréquences moyennes et se poursuit par limite décroissante à partir des fréquences moyennes vers les fréquences hautes.

Selon l'invention, le moyen de commande du circuit d'analyse et de commande intervient sur l'étage de puissance alimentant le motoréducteur. Cette intervention consiste à agir sur quelques pas de temps par exemple en coupant l'alimentation du motoréducteur de façon à relâcher par intermittence le serrage pour éviter l'amplification des bruits de broutage ou plus généralement des vibrations.

Suivant une autre caractéristique, le comparateur dispose de plusieurs gabarits dont l'un est sélectionné en fonction de l'état de fonctionnement du véhicule, état fourni par l'unité de gestion commandant le fonctionnement du véhicule.

Suivant une autre caractéristique avantageuse, le capteur est un capteur piézo-électrique, un capteur dynamométrique ou un accéléromètre.

Suivant une autre caractéristique avantageuse, le capteur est installé sur le fond du piston de frein ou sur la tige de poussée du piston ou encore entre le fond du piston de frein et l'étrier.

### Dessins

La présente invention sera décrite ci-après de manière plus détaillée à l'aide d'un exemple de réalisation d'un système de frein à disque électrique selon l'invention représenté schématiquement dans les dessins annexés dans lesquels :
- la figure 1 est un schéma d'ensemble du système de frein à disque selon l'invention,
- la figure 2 est un schéma du frein à disque selon l'invention,
- la figure 3 montre l'analyse de fréquence d'un signal fourni par un capteur,
   * la figure 3A montre un graphe fréquence/amplitude d'un signal de bruit,
   * la figure 3B montre la comparaison entre le graphe fréquence/amplitude et un gabarit prédéfini pour un signal analysé,
   * la figure 3C montre un autre exemple de comparaison entre un graphe d'un autre signal et le gabarit prédéfini,
- la figure 4 est un schéma de la courbe de l'intensité du courant électrique, commandée, alimentant le motoréducteur du frein à disque,
- la figure 5 est une vue de dessus d'un exemple de frein à disque selon l'invention.

### Description de modes de réalisation de l'invention

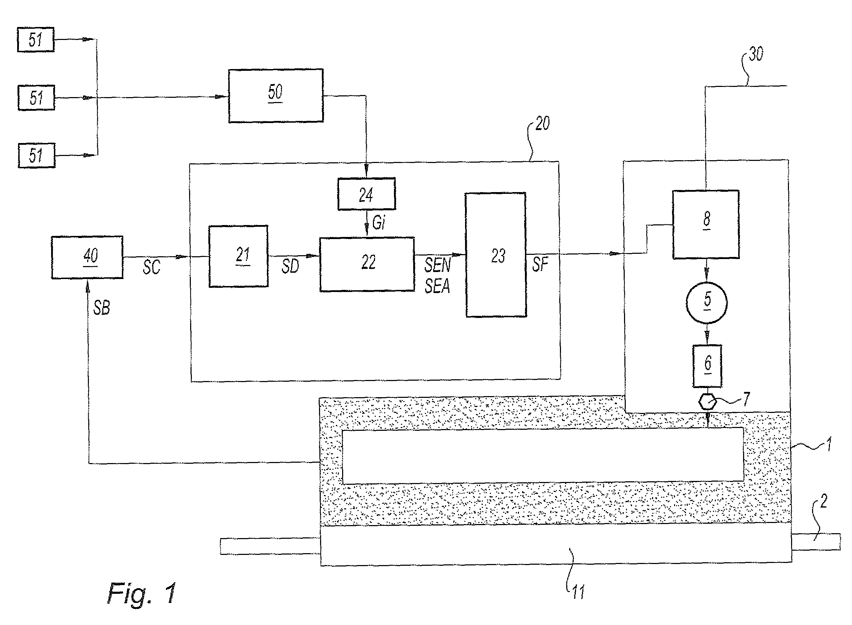

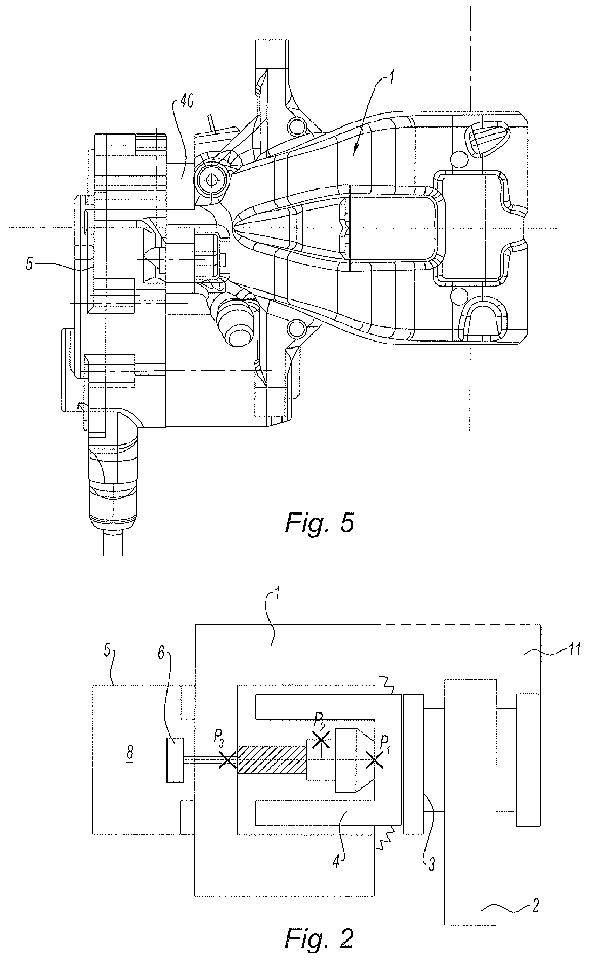

Selon les figures 1 et 2, l'invention concerne un système de frein à disque électrique d'un système de freinage de véhicule.

Le frein à disque se compose d'un étrier flottant 1 coiffant le disque de frein 2 représenté schématiquement avec, d'un côté, l'étrier 1 se prolongeant par une chape 11 portant un patin 12 et de l'autre un patin 3 porté par un piston 4. Le piston 4 est commandé pour effectuer le mouvement de serrage et le mouvement de desserrage appliqué par un motoréducteur électrique 5 associé à un convertisseur de mouvement 6. Ce convertisseur 6 transforme le mouvement de rotation du motoréducteur 5 en un mouvement de translation du piston 4. Un compensateur d'usure de frein 7 est interposé dans cette ligne de transmission de mouvement.

Le motoréducteur 5 est alimenté par un étage de puissance 8 commandé par le système de freinage du véhicule et par un circuit d'analyse et de commande 20 et relié au réseau d'alimentation électrique 30 du véhicule.

Le mouvement du piston 4 se traduit par le serrage du disque 2 à la fois par le patin 3 et le patin 12 par le déplacement de l'étrier 11 comme cela est connu.

Le mouvement de desserrage produit l'effet inverse avec dé-placement à la fois de l'étrier 11 et du piston 4 pour écarter les deux patins des faces opposées du disque de frein 2.

Le système comprend au moins un capteur 40 associé à l'étrier 1 et relié au circuit d'analyse et de commande 20. Le capteur 40 (ou un ensemble de plusieurs capteurs) est installé sur l'étrier 1 en un ou plusieurs points sensibles, pour détecter les vibrations de fonctionnement du frein (serrage et desserrage). Il s'agit par exemple d'un bruit de broutage ou de sifflement engendré par le frein en fonction de l'état de surface du disque et des plaquettes de frein ou de la présence de corps étrangers à la surface d'une plaquette; d'autres bruits peuvent être engendrés par le fonctionnement propre du frein, de la transmission de bruits de structure ou autres vibrations. Le capteur 40 est un capteur piézo-électrique, un capteur dynamométrique ou un accéléromètre

Le circuit d'analyse et de commande 20 comprend un moyen d'analyse 21 recevant le signal SC du capteur 40 pour fournir le résultat de l'analyse de fréquence SD à un comparateur 22 recevant par ailleurs comme élément de comparaison, un gabarit G prédéfini. En fonction du résultat de la comparaison il transmet, un signal SE à un moyen de commande 23 qui génère un signal de commande SF appliqué à l'étage de puissance 8 du motoréducteur 5 pour en commander ou en modifier le fonctionnement. Le signal de commande SF peut également être appliqué au circuit de commande de l'étage de puissance si ce circuit n'est pas intégré à l'étage de puissance.

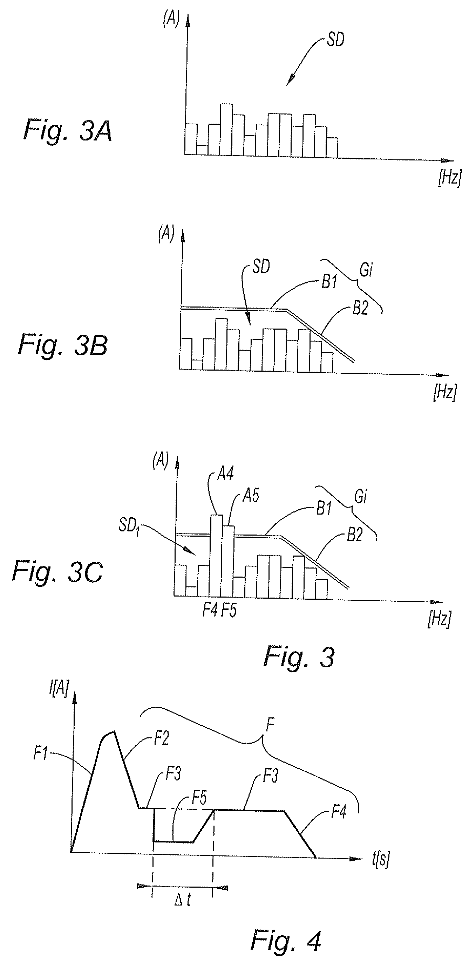

De façon plus détaillée, le moyen d'analyse de fréquence 21 effectue l'analyse en fréquence du signal SC du capteur 40 détectant un signal de bruit SB du frein. L'analyse consiste à appliquer une transformation de Fourrier rapide (transformation FFT) pour obtenir les amplitudes aux différentes fréquences analysées et tracer un graphe fréquence/amplitude (figure 3A).

Ce graphe SD est fourni au comparateur 22 qui reçoit un gabarit Gi prédéfini constituant le second terme de la comparaison à effectuer. Le gabarit préétabli Gi est fourni par une bibliothèque de gabarits 24 contenant l'enregistrement de différents gabarits établis par exemple selon différents états de fonctionnement du véhicule et des situations de freinage. Ces gabarits peuvent être définis à partir d'essais de freinage. La bibliothèque de gabarits 24 est commandée à partir du circuit de gestion 50 du moteur ou du véhicule recevant lui-même des informations de différents capteurs de fonctionnement 51 et choisissant le gabarit Gi applicable à l'état de fonctionnement instantané du véhicule et du frein à commander.

Le comparateur 22 compare le graphe fréquence/amplitude SD au gabarit Gi.

Selon l'exemple représenté (figures 3B, 3C), le gabarit Gi définit une enveloppe formée d'une branche B1 de hauteur constante (amplitude constante/amplitude limite) couvrant la plage des basses fréquences et des moyennes fréquences et se poursuivant par une branche décroissante B2 vers les fréquences élevées.

Selon l'exemple présenté à la figure 3B, le graphe fréquence/amplitude SD est contenu dans la limite du gabarit Gi, si bien que le comparateur transmet un signal de fonctionnement normal SEN au moyen de commande 23 qui ne modifie pas le fonctionnement du motoréducteur 5 actionnant le frein en n'intervenant pas sur l'étage de puissance 8.

Si au contraire selon l'exemple de la figure 3C, le graphe amplitude/fréquence SD₁ a certaines amplitudes dépassant le gabarit Gi, comme par exemple les amplitudes A4, A5 associées aux fréquences F4, F5, le comparateur 22 fournit un signal de dépassement de gabarit SEA au circuit de commande 23. Celui-ci génère un signal de fonctionnement SF pour modifier le fonctionnement du motoréducteur 5.

La figure 4 montre un exemple de commande du motoréducteur du frein. Le graphe F représente l'intensité (I) du courant appliqué au motoréducteur 5 par l'étage de puissance 8 en fonction du temps (t) pour une phase de freinage. Cette intensité (I) a une partie initiale (F1) fortement croissante pour redescendre (F2) à un palier d'amplitude constante (F3) correspondant sensiblement au serrage du frein, puis une branche descendante F4 correspondant au desserrage du frein.

Cette courbe normale de freinage initiale est modifiée par le circuit de commande 23 qui intervient par exemple sur le palier (F3) en le diminuant selon le tracé (F5) pendant une courte période Δt (quelques pas de temps) pour retourner au palier (F3), de façon à neutraliser ainsi la cause du bruit.

Le système de commande fonctionne en boucle fermée ou ouverte puisque le capteur 40 fournit en permanence, un signal transmis au circuit d'analyse et de commande 20 qui réagit alors immédiatement en réaction au signal.

La figure 2 montre différentes positions possibles pour un capteur par exemple, dans la position P1 entre le piston du convertisseur de mouvement et le fond du piston de frein. Ce piston de frein 4 est creux et entoure en partie le piston du convertisseur.

Le capteur peut également être installé sur le piston du convertisseur (position P2) ou entre la tige du piston et le motoréducteur (position P3).

La figure 5 est une vue de dessus d'un frein à disque à moteur électrique selon l'invention montrant les grands ensembles du frein, à savoir l'étrier 1 avec la chape 11 et le motoréducteur avec interposition d'un capteur de vibration 40.

Le motoréducteur 5 est fixé à l'arrière de l'étrier flottant 1.

Le système de commande de frein à disque électrique s'applique à chaque étrier de frein ou à seulement certains étriers de frein susceptibles de vibrer. Le système de commande peut également traiter de façon multiplexée, les signaux de plusieurs capteurs pour agir séparément sur les différents motoréducteurs de frein.

De façon générale, l'invention concerne le domaine des systèmes de freinage de véhicules automobiles.

### NOMENCLATURE DES ELEMENTS PRINCIPAUX

- 1: étrier flottant
- 2: disque de frein
- 3: patin mobile
- 4: piston de frein
- 5: motoréducteur
- 6: convertisseur de mouvement
- 7: compensateur d'usure
- 8: étage de puissance
- 11: chape
- 12: patin fixe
- 20: circuit d'analyse et de commande
- 21: moyen d'analyse
- 22: comparateur
- 23: moyen de commande
- 30: réseau électrique du véhicule
- 40: capteur de migration
- 50: circuit de gestion du moteur
- 51: capteur

- G, Gi: gabarit
- SB: signal de bruit émis par le frein
- SC: signal fourni par le capteur de vibration
- SD: signal résultant de l'analyse du signal du capteur
- SEN: signal de comparaison normal
- SEA: signal de comparaison avec dépassement de gabarit
- SF: signal de commande

## Revendications

1. Système de frein à disque électrique comprenant :
- un étrier (1) portant un premier patin de frein (12) et un piston (4) portant un second patin de frein (3) pour coopérer avec le disque de frein (2)
- un motoréducteur (5) actionnant le piston (4) de frein pour commander le mouvement de serrage et de desserrage du frein,
**caractérisé en ce qu'**il comprend :
A) au moins un capteur (40) qui est installé entre le fond du piston de frein et l'étrier de frein (11) combiné au frein pour saisir un signal de vibration émis par le frein, et
B) un circuit d'analyse et de commande (20) comprenant :
- un moyen d'analyse de fréquence (21) pour décomposer le signal en ses fréquences fondamentales,
- un comparateur (22) pour comparer l'enveloppe des fréquences à un gabarit (Gi), **caractérisé en ce qu'**il définit un niveau constant ou sensiblement constant (B1) pour les fréquences basses et moyennes et se poursuit par une limite décroissante (B2) à partir des fréquences moyennes vers les fréquences hautes, et
- un moyen de commande (23) recevant le signal en permanence de comparaison pour modifier l'action de serrage du frein par le motoréducteur (5) en fonction du résultat de la comparaison.

2. Système de frein à disque électrique selon la revendication 1,
**caractérisé en ce que**
le moyen d'analyse de fréquence (21) applique une transformation de Fou-rier rapide FFT au signal (SC) du capteur (40).

3. Système de frein à disque électrique selon la revendication 1,
**caractérisé en ce que**
le moyen de commande (23) intervient sur l'étage de puissance (8) alimentant le motoréducteur (5) sur quelques pas de temps (Δt).

4. Système de frein à disque électrique selon la revendication 1,
**caractérisé en ce que**
le comparateur (22) reçoit un gabarit (Gi) choisi parmi plusieurs gabarits (Gi), sélectionné en fonction de l'état de fonctionnement du véhicule, fourni par l'unité de gestion (50).

5. Système de frein à disque électrique selon la revendication 1,
**caractérisé en ce que**
le capteur (40) est un capteur piézo-électrique, un capteur dynamométrique ou un accéléromètre.

## Patentansprüche

1. Elektrisches Scheibenbremssystem, das enthält:
- einen Sattel (1), der einen ersten Bremsbelagträger (12) trägt, und einen Kolben (4), der einen zweiten Bremsbelagträger (3) trägt, um mit der Bremsscheibe (2) zusammenzuwirken,
- einen Stellmotor (5), der den Bremskolben (4) betätigt, um die Anzieh- und Lösebewegung der Bremse zu steuern,
**dadurch gekennzeichnet, dass** es enthält:
A) mindestens einen Sensor (40), der zwischen dem Boden des Bremskolbens und dem mit der Bremse kombinierten Bremssattel (11) eingebaut ist, um ein von der Bremse ausgegebenes Vibrationssignal zu erfassen, und
B) eine Analyse- und Steuerschaltung (20), die enthält:
- eine Frequenzanalyseeinrichtung (21), um das Signal in seine Grundfrequenzen zu zerlegen,
- einen Komparator (22), um die Hüllkurve der Frequenzen mit einer Frequenzkennlinie (Gi) zu vergleichen, **dadurch gekennzeichnet, dass** sie einen konstanten oder im Wesentlichen konstanten Pegel (B1) für die niedrigen und mittleren Frequenzen definiert und sich durch einen abnehmenden Grenzwert (B2) ausgehend von den mittleren Frequenzen zu den hohen Frequenzen fortsetzt, und
- eine Steuereinrichtung (23), die das Signal im Dauervergleich empfängt, um die Anziehaktion der Bremse durch den Stellmotor (5) abhängig vom Ergebnis des Vergleichs zu ändern.

2. Elektrisches Scheibenbremssystem nach Anspruch 1, **dadurch gekennzeichnet, dass** die Frequenzanalyseeinrichtung (21) eine schnelle Fourier-Transformation FFT an das Signal (SC) des Sensors (40) anwendet.

3. Elektrisches Scheibenbremssystem nach Anspruch 1, **dadurch gekennzeichnet, dass** die Steuereinrichtung (23) auf die den Stellmotor (5) versorgende Leistungsstufe (8) über einige Zeitschritte (Δt) eingreift.

4. Elektrisches Scheibenbremssystem nach Anspruch 1, **dadurch gekennzeichnet, dass** der Komparator (22) eine Frequenzkennlinie (Gi) empfängt, die aus mehreren Frequenzkennlinien (Gi) gewählt wird, ausgewählt abhängig vom Betriebszustand des Fahrzeugs, der von der Verwaltungseinheit (50) geliefert wird.

5. Elektrisches Scheibenbremssystem nach Anspruch 1, **dadurch gekennzeichnet, dass** der Sensor (40) ein piezo-elektrischer Sensor, ein dynamometrischer Sensor oder ein Beschleunigungsmesser ist.

## Claims

1. Electric disc brake system comprising:
- a stirrup (1) bearing a first brake pad (12) and a piston (4) bearing a second brake pad (3) to cooperate with the brake disc (2)
- a gear motor (5) actuating the brake piston (4) to control the clamping and unclamping movement of the brake, **characterized in that** it comprises:
A) at least one sensor (40) which is installed between the bottom of the brake piston and the brake stirrup (11) combined with the brake to input a vibration signal emitted by the brake, and
B) an analysis and control circuit (20) comprising:
- a frequency analysis means (21) for decomposing the signal into its fundamental frequencies,
- a comparator (22) for comparing the envelope of the frequencies to a mask (Gi), **characterized in that** it defines a constant or substantially constant level (B1) for the low and medium frequencies and is continued by a decreasing limit (B2) from the medium frequencies to the high frequencies, and
- a control means (23) receiving the signal permanently for comparison to modify the clamping action of the brake by the gear motor (5) as a function of the result of the comparison.

2. Electric disc brake system according to Claim 1
**characterized in that**
the frequency analysis means (21) applies a fast Fourier transform FFT to the signal (SC) from the sensor (40).

3. Electric disc brake system according to Claim 1,
**characterized in that**
the control means (23) acts on the power stage (8) powering the gear motor (5) over a few time steps (Δt).

4. Electric disc brake system according to Claim 1,
**characterized in that**
the comparator (22) receives a mask (Gi) chosen from a number of masks (Gi), selected as a function of the state of operation of the vehicle, supplied by the management unit (50).

5. Electric disc brake system according to Claim 1,
**characterized in that**
the sensor (40) is a piezo electric sensor, a dynamometric sensor or an accelerometer.
